# EUROPEAN PATENT APPLICATION

(11) **EP 4 311 303 A1**
(43) Date of publication of application: **24.01.2024**
(21) Application number: 22807704.6
(22) Date of filing: 03.05.2022
(51) Int. Cl.: H04W 28/18, H04W 28/24, H04W 24/08, H04W 88/02, H04W 84/12

(54) **ELECTRONIC DEVICE INCLUDING TARGET WAKE TIME (TWT) MONITORING MODULE AND METHOD FOR CONTROLLING TARGET WAKE TIME (TWT) BY USING SAME**

(30) Priority: 10.05.2021 KR 20210060086
(71) Applicant: Samsung Electronics Co., Ltd., Suwon-si, Gyeonggi-do 16677 (KR)
(72) Inventor: CHOI, Junsu, Suwon-si, Gyeonggi-do 16677 (KR); PARK, Junyoung, Suwon-si, Gyeonggi-do 16677 (KR); CHOI, Hyeonu, Suwon-si, Gyeonggi-do 16677 (KR); MYOUNG, Jeongyong, Suwon-si, Gyeonggi-do 16677 (KR); LEE, Junghun, Suwon-si, Gyeonggi-do 16677 (KR)
(74) Representative: Nederlandsch Octrooibureau
(86) International application number: PCT/KR2022/006343
(87) International publication number: WO 2022/240056

(57) **Abstract**

According to various embodiments, an electronic device may comprise a first processor, a communication module including a second processor, and a memory, wherein the memory includes instructions for controlling the first processor to: control the communication module to perform data transmission to/reception from an access point according to a target wake time (TWT) agreement on the basis of a first TWT parameter when communicating with the access point; monitor at least one of downlink packets received from the second processor and uplink packets transferred to the second processor; estimate a TWT service period (SP) and TWT interval of a communication link level having been processed in the second processor, by using the monitored traffic pattern; update the first TWT parameter with a second TWT parameter suitable for quality of service (QoS) of at least one application or service operated in the first processor on the basis of the estimated TWT interval and TWT SP; and transfer the second TWT parameter to the second processor so as to make a re-agreement on TWT with the access point.

## Description

### [Technical Field]

Various embodiments relate to an electronic device including a target wake time (TWT) monitoring module and a method of controlling target wake time (TWT) by using the same.

### [Background Art]

In a WLAN environment, for example, the IEEE 802.11ax (or Wi-Fi 6) standard supports not only connectivity services of different qualities according to service requirements of users but also a target wake time (TWT) technology for occupying radio media (for example, radio channels) at different times according to service types of traffic.

In the TWT technology, an electronic device (for example, an STA or a station) and an access point (AP) negotiate a wake time and transmit/receive data on a predetermined cycle and at a service time.

A traffic characteristic of the TWT operation may vary depending on a network state and a service state. Accordingly, the electronic device is required to configure TWT parameters which satisfy quality of service (QoS) requirements of an executed application or service and change TWT negotiation in real time in consideration of various pieces of information such as a needed TWT period, an amount of traffic, a current transmission rate in a radio communication link (for example, a Wi-Fi link), and contention on the basis of the executed application or service.

### [Disclosure of Invention]

### [Technical Problem]

In the TWT operation, information related to packets transmitted and received in real time should be monitored and TWT parameters according to QoS requirements should be determined on the basis of the monitoring result. However, the operation of monitoring a TWT usage characteristic may include identifying the number of packets transmitted and received in units of SPs for data transmitted and received to and from the AP in real time, a buffered traffic transmission interval, and a transmission/reception time of packets and require a complex calculation operation such as a mean, a maximum value, or a minimum value, and accordingly, high-performance processing may be needed. Therefore, attempt to implement TWT control and monitoring in a high-performance processor (for example, an application processor) is being made.

A TWT negotiation is performed between an access point (AP) and a communication processor (for example, a Wi-Fi chipset), and the high-performance processor (for example, the application processor) controlling the overall operation of the electronic device processes data transferred from the AP via the communication processor.

Accordingly, the high-performance processor (for example, the application processor) may have a problem that information at a wireless communication link level (for example, a Wi-Fi link level) (in other words, a network environment of a communication processor in which a TWT agreement result is reflected), for example, a TWT usage characteristic cannot be identified.

Various embodiments may propose a method and an apparatus for implementing a TWT control and monitoring module in a high-performance processor, allowing the high-performance processor to monitor traffic-related information at a wireless communication link level (for example, a Wi-Fi link level) (in other words, a network environment of a communication processor in which a TWT agreement result is reflected) and making a change to TWT parameters in which the TWT usage characteristic of the wireless communication link level is reflected on the basis of the monitoring result.

### [Solution to Problem]

According to various embodiments, an electronic device may comprise a first processor, a communication module including a second processor, and a memory, wherein the memory includes instructions for controlling the first processor to: control the communication module to perform data transmission to/reception from an access point according to a target wake time (TWT) agreement on the basis of a first TWT parameter when communicating with the access point; monitor at least one of downlink packets received from the second processor and uplink packets transferred to the second processor; estimate a TWT service period (SP) and TWT interval of a communication link level having been processed in the second processor, by using the monitored traffic pattern; update the first TWT parameter with a second TWT parameter suitable for quality of service (QoS) of at least one application or service operated in the first processor on the basis of the estimated TWT interval and TWT SP; and transfer the second TWT parameter to the second processor so as to make a re-agreement on TWT with the access point.

According to various embodiments, a method of controlling a target wake time (TWT) by an electronic device, the method comprising controlling a communication module to transmit and receive data to and from an access point according to a target wake time (TWT) agreement based on a first TWT parameter by a first processor, transmitting and receiving communication data to and from a second processor included in the communication module during communication with the AP, identifying a traffic pattern by monitoring at least one of downlink packets received from the second processor and uplink packets transferred to the second processor by the first processor, estimating a TWT interval and a TWT service period (SP) of a communication link level processed by the second processor using the monitored traffic pattern, updating the first TWT parameter to a second TWT parameter corresponding to a quality of service (QoS) of at least one application or service executed by the first processor, based on the estimated TWT interval and TWT SP and performing control to renegotiate the TWT with the access point by transferring the second TWT parameter to the second processo

### [Advantageous Effects of Invention]

According to various embodiments, an electronic device can implement a TWT control module and a TWT monitoring module for controlling TWT parameters in real time in a high-performance processor according to a condition of an application or service being executed in real time.

According to various embodiments, the electronic device can monitor a TWT usage characteristic at a wireless communication link level (for example, a Wi-Fi link level) (in other words, a network environment of a communication processor in which a TWT agreement result is reflected) by correcting a traffic pattern of downlink to a traffic pattern of the wireless communication link level and estimating a traffic pattern through the high-performance processor.

According to various embodiments, the electronic device can provide a TWT environment suitable for a condition of an application or service being executed in real time by making a TWT re-agreement through a change to TWT parameters in which the TWT usage characteristic at the wireless communication link level is reflected by the high-performance processor, so that collision due to concentration of traffic at the same time can be prevented and thus a service quality and a connectivity service quality required for each service type in a WLAN environment can be guaranteed.

### [Brief Description of Drawings]

FIG. 1 is a block diagram illustrating an example electronic device in a network environment according to various embodiments.
FIGs. 2A and 2B illustrate the TWT operation in a wireless local area network (WLAN) environment according to an embodiment.
FIG. 3A illustrates a TWT control environment of the electronic device according to an embodiment.
FIG. 3B illustrates a data processing layer structure according to an embodiment.
FIG. 4 is a block diagram illustrating a configuration of an electronic device according to various embodiments.
FIG. 5 illustrates a method of controlling a target wake time (TWT) in an electronic device including a target wake time (TWT) monitoring module according to various embodiments.
FIG. 6A is a flowchart illustrating a TWT monitoring operation according to various embodiments.
FIG. 6B is a flowchart illustrating in detail the packet time correction operation (A) of FIG. 6A.
FIG. 6C is a flowchart illustrating in detail the TWT service time estimation operation (B) of FIG. 6A.
FIG. 7 illustrates a traffic pattern of downlink packets according to an embodiment.
FIG. 8 illustrates a situation in which skipped TWT SP during TWT SP estimation may be generated according to an embodiment.
FIG. 9 illustrates a situation of communication coexistence using the TWT operation according to an embodiment.

### [Mode for the Invention]

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

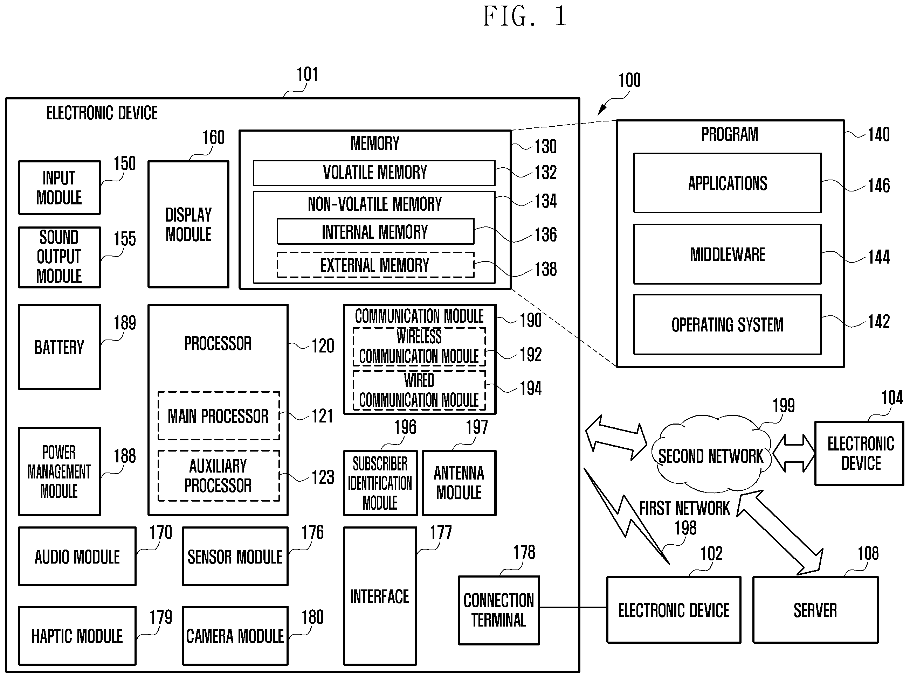

FIG. 1 is a block diagram illustrating an example electronic device in a network environment according to various embodiments.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In various embodiments, at least one (e.g., the display device 160 or the camera module 180) of the components may be omitted from the electronic device 101, or one or more other components may be added in the electronic device 101. In various embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196).

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197 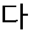 .

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

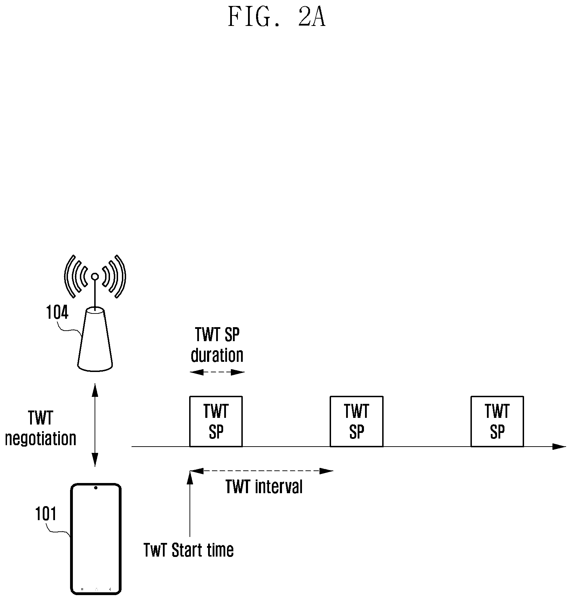

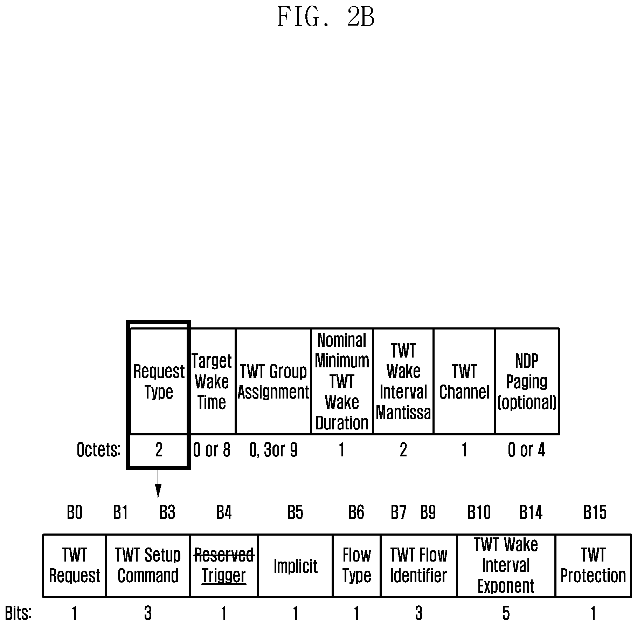

FIGs. 2A and 2B illustrate the TWT operation in a wireless local area network (WLAN) environment according to an embodiment.

Referring to FIGs. 2A and 2B, according to an embodiment, the electronic device 101 may communicate with an external device, for example, the AP 104 according to the wireless standard (for example, 802.11ax) in the WLAN environment. The electronic device 101 may include the electronic device 102 of FIG. 1.

The AP 104 may support the connection between the electronic device 101 and an external network (for example, a cellular network, Internet, or an external LAN) and perform an operation of transmitting data of the electronic device 101 to the external network and an operation of transmitting data received from the external network to the electronic device 101.

The electronic device 101 may communicate with the AP 104 on the basis of a target wake time (TWT). The target wake time (TWT) is defined in the 802.11 (for example, 802.11ax) standard and may be agreement (TWT agreement) (or convention) negotiated between the electronic device 101 and the AP 104 on the basis of a service type (or traffic activity) required by the electronic device 101 (For example, stations). The TWT may be used for the purpose of dynamically allocating radio media (or radio communication channels) to electronic devices (in other words, differently allocate the time for access to radio media according to each service type) according to a service type required by the electronic device 101.

The electronic device 101 and the AP 104 may negotiate TWT parameters. The AP 104 may negotiate TWT parameter with the electronic device 101 on the basis of a network situation of a plurality of electronic devices communication-connected with the AP 104 and make a TWT agreement (or confirmation) on the basis of the negotiated TWT parameters. The TWT parameters may be determined by the electronic device 101 and transmitted to the AP 104 through a TWT parameter set field, or may be determined by the AP 104 and transmitted to the electronic device 101. For example, the TWT parameters may be determined on the basis of a response (TWT accept) of the AP 104 to a request including TWT parameters determined by the electronic device 101.

The TWT parameters are TWT setting information (TWT settings) and may include a TWT identification (ID), a service type allocated to TWT (for example, voice (VO), video (VI), best effect (BE), and background (BK)), a time point at which TWT starts (wake time), TWT service period (SP) duration (in other words, time from a time point at which TWT starts to a time point at which TWT ends), and/or a TWT interval (in other words, a period from the start of the TWT to the start of the next TWT).

For example, FIG. 2B illustrates a TWT parameter set field configured in a frame exchanged between the electronic device 101 and the AP 104 in TWT negotiation.

The target wake time may define a first start time at which the electronic device 101 and the AP 104 wake up to exchange data packets. For example, the target wake time may be information on the TWT start time illustrated in FIG. 2A.

TWT wake interval mantissa and TWT wake interval exponent may define an interval between the first service start time and the following service start times. For example, the TWT wake interval mantissa and/or the TWT wake interval exponent may include information on the TWT interval illustrated in FIG. 2A.

Nominal minimum TWT wake duration may define a minimum time during which the electronic device 101 should wait before switching back to a sleep state when there is no response from the AP 104 (or there is no transmitted traffic) in the state in which the electronic device switches to an active state for data transmission and reception at a specific wake time. For example, the nominal minimum TWT wake duration may include information on the TWT service period (SP) duration illustrated in FIG. 2A.

A TWT flow identifier may be used to distinguish different TWT negotiations, and several negotiations may be simultaneously configured through the TWT flow identifier. For example, since 3 bits are allocated to the TWT flow identifier, 8 different negotiations may be operated at the same time.

The TWT parameters may include different parameters according to a service in order to meet the QoS required by an application or a service on the basis of the TWT agreement.

When executing an application or a service, the electronic device 101 may identify a TWT parameter (or TWT configuration information) according to a service type in communication with the AP 104. The electronic device 101 may attempt access to a radio medium (or a radio communication link) on the basis of the TWT parameter (configuration information) agreed with the AP 104.

For example, the electronic device 101 may operate in an active state during a TWT service period (hereinafter, referred to as a TWT SP) assigned to the electronic device according to authority and may operate in an inactive state during a period having no authority. The electronic device 101 may transmit and receive uplink (UL)/downlink (DL) data (packets) from the TWT start time to the TWT SP. The AP 104 may transmit data to the electronic device 101 only during the TWT SP of the electronic device 101 according to the TWT agreement with the electronic device 101.

The electronic device 101 may be activated only during the TWT SP at TWT intervals and transmit and receive uplink (UP)/downlink (DL) data to an external network through the AP 104.

The electronic device 101 and the AP 104 may perform time synchronization between devices. For example, the AP 104 may transmit a frame including a timing synchronization function (TSF), and timers of the electronic device 101 and the AP 104 may be synchronized. The electronic device 101 and the AP 104 may operate according to the TWT start time, the TWT SP, and the TWT interval on the basis of the synchronized timer.

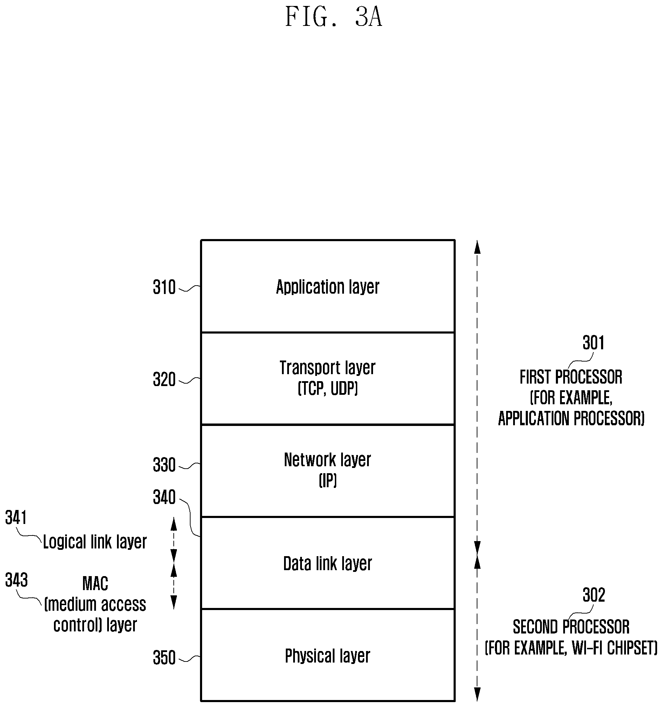

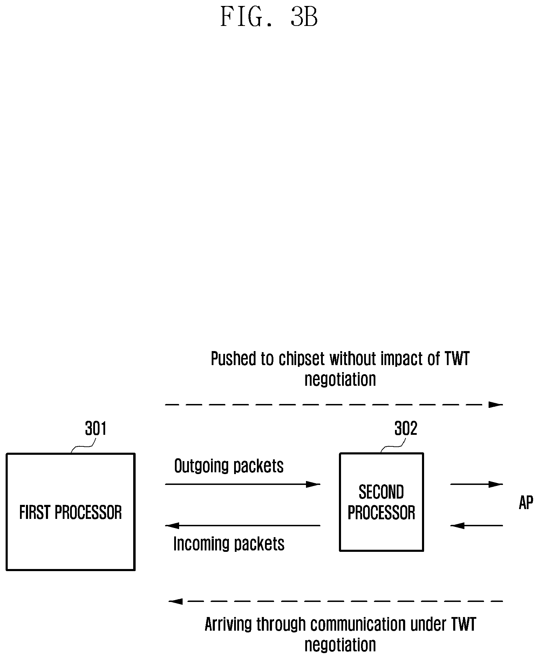

FIG. 3A illustrates a TWT control environment of the electronic device according to an embodiment, and FIG. 3B illustrates a data processing layer structure according to an embodiment.

The electronic device 101 (for example, the electronic device of FIG. 1) according to an embodiment may process data transmitted and received to and from the AP (for example, the AP 104 of FIG. 2) on the basis of a wireless communication protocol. The wireless communication protocol may include an application layer 310, a transport layer 320, a network layer 330, a data link layer 340, and a physical layer 350 as illustrated in FIG. 3A, and the data link layer 340 may be divided into a local link layer 341 and a medium access control (MAC) layer 343.

The electronic device 101 may process data (packets) transmitted and received to and from the AP according to the control of a first processor 301 and a second processor 302. For example, data processing by the local link layer of the data link layer 330 from the application layer 310 via the transport link layer 320 may be performed by the first processor 301 (for example, an application processor or a main processor), and data processing by the physical layer 350 from the MAC layer 343 of the data link layer 340 may be performed by the second processor 302 (for example, a communication processor, a sub processor, or a Wi-Fi chip)

For example, as illustrated in FIG. 3B, the first processor 301 may process data or packets (for example, uplink (UL) packets or outgoing packets) related to an application or a service via the application layer 310, the transport layer 320, the network layer 330, and the local link layer 341 and then transfer the processed data or packets to the second processor 302.

The second processor 302 may process the data or packets (for example, uplink (UL) packets or outgoing packets) received from the first processor 301 via the MAC layer 343 and the physical layer 350 and transmit the data or packets to the AP during the TWT service period (SP) through a communication link (for example, a Wi-Fi link) with the AP.

In another example, the second processor 302 may process the data or packets (downlink (DL) packets or incoming packets) received from the AP during the TWT service period (SP) via the physical layer 350 and the MAC layer 343 and transfer the processed data or packets to the first processor 301.

The first processor 301 may process the data or packets (downlink (DL) packets or incoming packets) received from the second processor 302 via the local link layer 341, the network layer 330, the transport layer 320, and the application layer 310.

For example, the uplink data may be transferred from the first processor 301 to the second processor 302 and transferred from the second processor 302 to the AP. The downlink data may be transferred from the AP to the second processor 302 and transferred from the second processor 302 to the first processor 301.

The electronic device 101 may perform various applications or services, such as a game, video streaming, a conference call, and a VoIP, in the WLAN environment. The applications or services may generate traffic on different periods and different amounts of traffic. Further, a transmission rate is changed according to a communication environment (or a link condition) of a radio link (for example, a Wi-Fi link) with the AP, and a traffic transmission time may vary depending on whether the AP may be connected to several different electronic devices and a wireless medium is shared.

The electronic device 101 may determine whether the currently configured TWT satisfies the quality of service (QoS) required by the application or service being executed and monitor a TWT usage characteristic in order to update TWT parameters of the electronic device 101 in real time in case of necessity. The TWT control and monitoring may need high-performance processing.

The first processor 301 communicates with the AP via the second processor 302, and thus may have difficulty in accurately identifying a TWT usage characteristic of a communication link (for example, a Wi-Fi link) level (in other words, the second processor 302 may have difficulty in accurately identifying a network condition characteristic according to the result of TWT negotiation). Accordingly, the first processor 301 is required to accurately monitor the TWT usage characteristic at the communication link (for example, a Wi-Fi link) level for controlling the TWT in real time.

When the electronic device 101 communicates with the AP, the first processor 301 transfers data to the second processor 302 regardless of TWT negotiation, but the second processor 302 may transfer data reflecting the TWT usage characteristic according to the TWT negotiation and agreement with the AP to the first processor 301.

Hereinafter, according to various embodiments, operations in which the first processor 301 implements the TWT control and TWT monitoring operation but the first processor 301 estimates a TWT interval and a TWT service period at a communication link (for example, a Wi-Fi link) level to control the TWT in real time are described in detail.

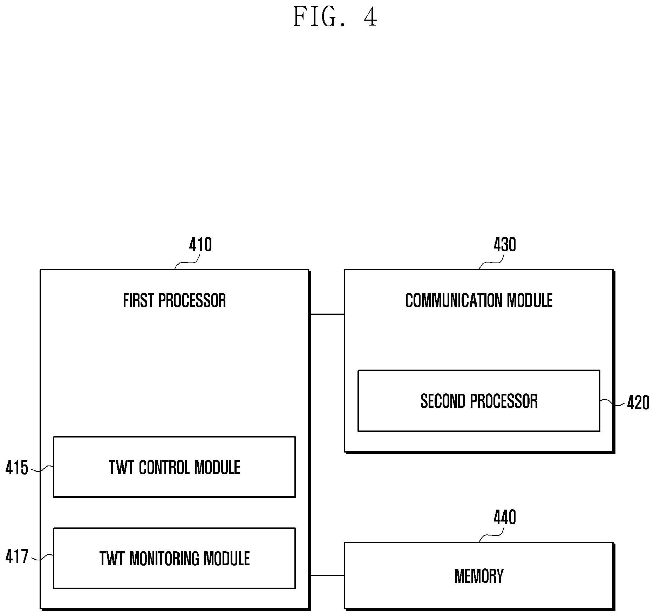

FIG. 4 is a block diagram illustrating a configuration of an electronic device according to various embodiments.

Referring to FIG. 4, an electronic device (for example, the electronic device 101 of FIG. 1) according to an embodiment may include a first processor 410 (for example, an application processor or a main processor), a communication module 430, and a memory 440. The electronic device 101 may further include at least some of the configurations and/or functions of the electronic device 101 of FIG. 1 or may include the elements which overlap those in FIG. 1.

The memory 440 may be operatively connected to the first processor 410 and a second processor 420 and store various instructions which can be executed by the first processor 410 and the second processor 420. Operations of the first processor 410 and the second processor 420 described below may be performed by loading the instructions stored in the memory 440.

The communication module 430 may include the second processor 420 for controlling data transmission and reception to and from the outside. For example, the communication module 430 may receive a communication signal from the outside or transmit a communication signal to the outside on the basis of, for example, the IEEE 802.11 standard among Wi-Fi communication schemes. The second processor 420 may be referred to as a communication processor or a Wi-Fi chipset.

The communication module 430 may be connected to Wi-Fi communication and simultaneously connected to another type of Bluetooth communication (or low-energy Bluetooth) or ultra wide band (UWB) communication that measures the distance between two electronic devices. The communication module 430 may be connected to a first mode (for example, a Wi-Fi station) of Wi-Fi communication and a second mode (for example, Wi-Fi direct, Wi-Fi aware, or Wi-Fi hotspot) at the same time.

The second processor 420 may configure a communication link with an access point (AP) (for example, the AP 104 of FIG. 2) by controlling the communication module 430. The second processor 420 may activate the communication module 190 according to a TWT agreement negotiated with the AP. For example, the second processor 420 may activate the communication module 430 on the basis of the TWP parameter determined in consideration of an application or service characteristic.

For example, the second processor 420 may process (for example, MAC layer processing and physical layer processing) uplink data transmitted from the first processor 410 and transmit the update data to the AP during the TWT service period (SP) from the TWT start time as illustrated in FIG. 2.

In another example, the second processor 420 may process (for example, MAC layer processing and physical layer processing) downlink data received from the AP during the TWT service period (SP) from the TWT start time and transfer the downlink data to the first processor 410.

The first processor 410 may perform the overall operation of the electronic device 101 and control the TWT control and TWT monitoring operation and the operation of communicating with the AP through the communication module 430. The first processor 120 may be referred to as an application processor or a main processor.

The first processor 410 may include a TWT control module 415 and a TWT monitoring module 417. The first processor 410 may control the operation of the modules 415 and 417.

According to an embodiment, the TWT control module 415 may determine the TWT parameter for the TAT agreement (for example, including a negotiation and a convention) with the AP. For example, the first processor 410 may identify a type of an application or service being executed and determine the TWT parameter on the basis of the target wake time (TWT) based on a quality of service (QoS) of the service type. The TWT parameter may be determined differently according to a service type.

The TWT control module 415 may transfer the TWT parameter to the second processor 420. The second processor 420 may carry out the TWT convention with the AP on the basis of the TWT parameter and carry out the TWT agreement. The first processor 410 may transfer uplink data (outgoing packets) related to the application or service being executed to the second processor 420 and receive downlink data (incoming packets) received from the AP from the second processor 420 under the TWT agreement.

In connection with the application or service being executed, the TWT monitoring module 417 may monitor uplink traffic transferred from the first processor 410 to the second processor 420 during communication with AP.

Independently from this, the TWT monitoring module 417 may monitor downlink traffic transferred from the second processor 420 to the first processor 410.

The TWT monitoring module 417 may correct a reception time of the downlink packets to a reception time at a wireless link level (in other words, a time point at which the second processor 420 communicates with the AP) and estimate a TWT interval and a TWT service period (SP) at a communication link (for example, a Wi-Fi link) level on the basis of the corrected downlink traffic.

The TWT monitoring module 417 may identify a TWT usage characteristic at the communication link (for example, a Wi-Fi link) level processed by the communication module 430.

For example, the TWT monitoring module 417 may calculate and record the number of downlink packets according to each estimated TWT service period (SP) and, a packet size (DL packet count and packet size), a packet transmission and reception time from the TWT SP start time to the last time point (SP usage data time), the number of packets buffered during a doze state after a previous TWT SP (DL buffered packet count), and a packet size (DL buffered packet size).

The TWT monitoring module 417 may record the number of uplink packets (UL packet count) for the current TWP SP and the packet size for the uplink packets transmitted from the first processor to the second processor on the basis of the estimated TWT SP.

The TWT monitoring module 417 may monitor TWT usage characteristic information (for example, TWT usage statistics, an early termination time, latency, and a packet transmission/reception time at a communication link level) by analyzing recorded information.

The TWT monitoring module 417 may provide the TWT control module 415 with the TWT usage characteristic information related to communication with the AP on the basis of the monitoring result.

The TWT control module 415 may determine (or decide) whether the TWT parameter configured under the TWT agreement currently made on the basis of the TWT usage characteristic information transmitted from the TWT monitoring module 417 satisfies the quality of service (QoS) required by the application or service being executed.

For example, the TWT control module 415 may analyze whether duration of the TWT service period (SP) can be increased on the basis of at least one of an average transmission/reception time of buffered traffic, a buffered traffic transmission interval, the number of packets from a TWT service period (SP) start time to a last time point, or latency generated by mac layer processing of the second processor. The TWT control module 145 may determine a TWT parameter for controlling duration of the currently configured TWT service period (SP) on the basis of the analysis result.

In another example, the TWT control module 415 may determine a TWT parameter for configuring an optimal TWT service period (SP) and TWT interval which may satisfy the QoS requirement of the application or service being executed in consideration of information, such as a communication cycle required in connection with the application or service being executed, an amount of traffic, a current transmission rate at a communication link level (a Wi-Fi link), and line contention information.

The TWT control module 415 may update or change the TWT parameter of the electronic device 101 as necessary and transfer the TWT parameter changed in real time to the second processor 420, and the second processor 420 may perform control to renegotiate the changed TWP parameter with the AP.

According to various embodiments, an electronic device (for example, the electronic device 101 of FIG. 1) may include a first processor (for example, the main processor 121 of FIG. 1, the first processor 301 of FIG. 3A, or the first processor 410 of FIG. 4), a communication module (for example, the communication module 190 of FIG. 1 or the communication module 430 of FIG. 4) including a second processor (for example, the second processor 302 of FIG. 3A or the second processor 420 of FIG. 4), and a memory (for example, the memory 130 of FIG. 1 or the memory 440 of FIG. 4), and the memory may include instructions causing the first processor to control the communication module to transmit and receive data to and from an access point according to a target wake time (TWT) agreement based on a first TWT parameter in communication with the access point (for example, the access point 104 of FIG. 2A), identify a traffic pattern by monitoring at least one of downlink packets received from the second processor and uplink packets transferred to the second processor, estimate a TWT interval and a TWT service period (SP) of a communication link level processed by the second processor using the monitored traffic pattern, update the first TWT parameter to a second TWT parameter corresponding to a quality of service (QoS) of at least one application or service executed by the first processor, based on the estimated TWT interval and TWT SP, and perform control to renegotiate the TWT with the access point by transferring the second TWT parameter to the second processor.

According to various embodiments, the memory may further include instructions causing the first processor to correct a reception time of the downlink packets to a reception time at the communication link level processed by the second processor by subtracting a processing and transmission time of the packets by the second processor, based on an inter packet time between a time point at which a first packet is received and a time point at which a second packet is received for the downlink packets in order to estimate the TWT interval and the TWT service period of the communication link level, and identify a traffic pattern corrected from the monitored traffic pattern by estimating TWT SPs at the communication link level.

According to various embodiments, the memory may further include instructions causing the first processor to designate a first inter packet time satisfying a condition being larger than a threshold value as a reference range of separating a first TWT SP and a second TWT SP among the inter packet times for the downlink packets and determine a first packet to a last packet at a time point at which the condition in which the inter packet time is larger than the threshold value is not satisfied as packets included in one TWT SP, and the threshold value may be a value obtained by subtracting the TWT SP and a preset first margin from a TWT interval time indicating all intervals before start of a next TWT SP from a time point at which one TWT SP starts.

According to various embodiments, the memory may further include instructions causing the first processor to, in case that the inter packet time of the received packet is larger than the threshold value, correct a time point at which the first processor receives the received packets to the reception time point of the communication link level by subtracting a time required for processing and receiving mac layer data and physical layer data and a time required for receiving payload data from the time point and, in case that the inter packet time of the received packet is smaller than the threshold value, correct the time point at which the received packet is received to the reception time of the communication link level by subtracting a time required for receiving mac layer data and the time required for receiving payload data from the time point.

According to various embodiments, the memory may further include instructions causing the first processor to separate transmission intervals of packets buffered in a doze state between the first TWT SP and the second TWT SP, detect skipped TWT SPs, and increase an index of the TWT SP by the detected number, so as to identify the corrected traffic pattern.

According to various embodiments, the memory may further include instructions causing the first processor to detect the skipped TWT SPs, based on a first condition in which the inter packet time of packets is larger than the threshold value and a second condition in which a time obtained by subtracting a previous packet time (first packet time) from a current packet time is larger than a time obtained by subtracting a preset second margin from the TWT SP, based on the corrected traffic pattern.

According to various embodiments, the memory may further include instructions causing the first processor to divide an inter packet time satisfying both the first condition and the second condition by the TWT interval, detect a number of skipped TWT SPs, and increase indexes of TWT SPs by the detected number.

According to various embodiments, the memory may further include instructions causing the first processor to determine whether an inter packet time which does not satisfy the first condition and the second condition is larger than a threshold value and, in case that the inter packet time is larger than the threshold value, estimate that a current TWT SP ends, increase packets received at the inter packet time which does not satisfy the first condition and the second condition in a number of buffered packets (DL buffered packet count) and a packet size of the next TWT SP, and record a number and a size of downlink packets received within the current TWT SP.

According to various embodiments, the memory may further include instructions causing the first processor to, in case that the inter packet time which does not satisfy the first condition and the second condition is smaller than the threshold value, estimate that the current TWT SP does not end and record a number of downlink packets in a current TWT SP and a packet size.

According to various embodiments, the memory may further include instructions causing the first processor to record a number of uplink packets for a current TWT SP and a packet size for the uplink packets transferred from the first processor to the second processor, based on the estimated TWT SP in order to estimate the TWT interval and the TWT service period (SP) of the communication link level.

According to various embodiments, the memory may further include instructions causing the first processor to correct the reception time of the downlink packets and estimate the TWT service periods at the communication link level, so as to calculate a packet transmission/reception time (SP usage data time) from a TWT SP start time to a last time point, a number of buffered packets (DL buffered packet count) during a doze state after a previous TWT SP, a packet size (DL buffered packet size), and an uplink packet count and identify TWT usage characteristic information by analyzing the calculated information, and the TWT usage characteristic information may include at least one of TWT usage statistics, an early termination time, latency, and a packet transmission/reception time at the communication link level.

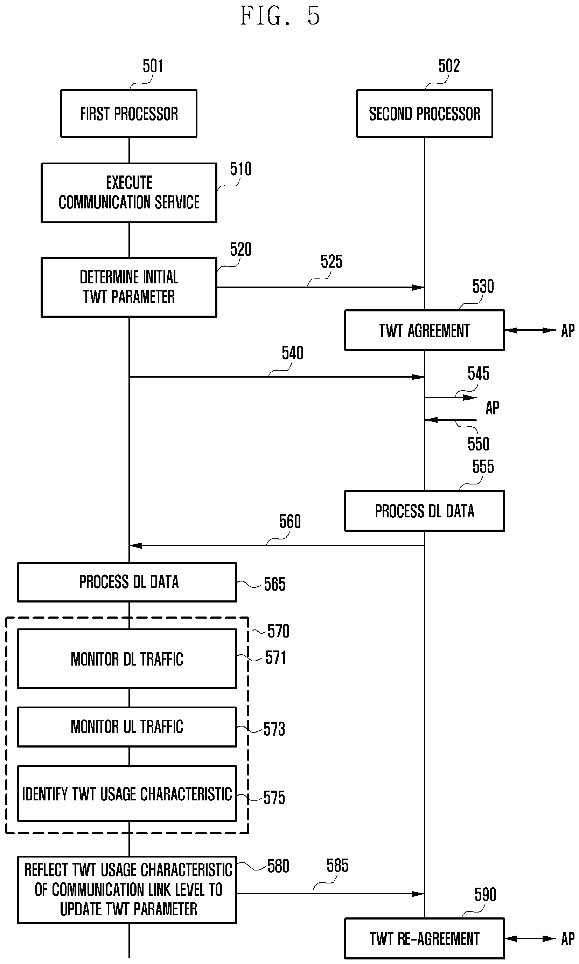

FIG. 5 illustrates a method of controlling a target wake time (TWT) in an electronic device including a target wake time (TWT) monitoring module according to various embodiments.

Referring to FIG. 5, a processor 501 of the electronic device 101 according to an embodiment may receive a request for executing a communication service with an external network in operation 510.

For example, the first processor 501 may perform a communication service in response to a user input making a request for executing an application or service requiring an external network connection such as a game, video streaming, a conference call, or a voice over Internet protocol (VoIP).

For example, the electronic device 101 may perform a communication operation with the AP on the basis of Wi-Fi communication.

In operation 520, the first processor 501 may determine an initial TWT parameter according to quality of service (QoS) requirements of the application or service.

The TWT parameters are TWT setting information (TWT settings) and may include a TWT identification (ID), a service type allocated to TWT (for example, voice (VO), video (VI), best effect (BE), and background (BK)), a time point at which TWT starts (wake time), TWT service period (SP) duration (in other words, time from a time point at which TWT starts to a time point at which TWT ends), and/or a TWT interval (in other words, a period from the start of the TWT to the start of the next TWT).

In operation 525, the first processor 501 may transfer the determined TWT parameters to a second processor 502 of the communication module.

In operation 530, the second processor 502 may make a TWT agreement by making a negotiation (for example, convention and confirmation) on the basis of the TWT parameters.

For example, the second processor 502 may make a request for a TWT configuration on the basis of the TWT parameters. The AP may schedule the TWT according to the TWT configuration request made by the electronic device 101 and accept or reject the request. The second processor 502 may complete the TWT agreement according to approval (for example, accept TWT) of the AP.

The electronic device 101 may transmit and receive data to and from the AP under the TWT agreement. The first processor 501 of the electronic device 101 may transmit uplink data to the AP or receive downlink data from the AP through the second processor 502.

The uplink data and the downlink data may be transmitted and received regardless of the order.

For example, in operation 540, the first processor 501 may transfer the uplink data to the second processor 502 to transmit the same to the AP under the TWT agreement. In operation 545, the second processor 502 may process uplink data (for example, mac layer processing and physical layer processing) and transfer the uplink data to the AP during a TWT service period (SP) at a TWT start time according to the TWT agreement. The second processor 502 may be activated at TWT intervals and may transfer the uplink data to the AP during the TWT service period (SP).

As another example, in operation 550, the second processor 502 may receive downlink data from the AP during the TWT service period (SP) at a TWT start time regardless of the uplink data.

In operation 555, the second processor 502 may process the downlink data (for example, physical layer processing and mac layer processing). As an example, the second processor 502 may process the downlink data on the physical layer and the mac layer (see FIG. 3). The second processor 502 may process an entity of the physical layer (for example, PHY preamble) included in the downlink data (for example, downlink packets) transferred from the AP and process an entity of the mac layer (for example, mac header).

The second processor 502 may or may not perform aggregation of the downlink packets according to a data type. For example, the second processor 502 may generate at least one of a mac protocol data unit (MPDU), an aggregated MPDU (A-MPDU) obtained by aggregating a plurality of MPDUs, or an aggregated MSDU (A-MSDU) obtained by aggregating a plurality of mac service data units (MSDUs) on the mac layer according to a data type.

As an embodiment, when performing aggregation, the second processor 502 may generate the mac protocol data unit (MPDU). As another example, when the total payload is smaller than a predetermined length, the second processor 502 may generate the aggregated MSDU (A-MSDU).

In operation 560, the second processor 502 may transfer the downlink data (for example, downlink packets) processed on the mac layer to the first processor 501.

In operation 565, the first processor 501 may process the downlink data transferred from the second processor 501. For example, the first processor 501 may process payload data of the downlink data as incoming packets.

In operation 570, the first processor 501 may monitor uplink traffic and downlink traffic and estimate a TWT usage characteristic (for example, the TWT interval and the TWT service period (SP)) at the communication link level. The uplink traffic may be an amount of transmission of uplink data transferred from the first processor 501 to the second processor 502, and the downlink traffic may be an amount of transmission of downlink data transferred from the second processor 502 to the first processor 501. The first processor 501 may monitor uplink traffic or downlink traffic in parallel or regardless of the order.

In description of the monitoring operation, the first processor 501 may monitor downlink traffic by using downlink data (or incoming packets) received from the second processor 502 and estimate the TWT interval and the TWT SP in operation 571.

More specifically, the first processor 501 may correct the reception time of packets to a time point at which the packets are received at the communication link level on the basis of an inter packet time of the downlink packets. The inter packet time may be a time difference between initial packet reception and the next packet reception.

Since the first processor 501 processes the payload data of the downlink packets as the incoming packets, information on a situation in which the second processor 502 processes the physical layer and mac layer entities, for example, information such as a time at which the physical layer and the mac layer entities are processed, whether aggregation is performed, and an aggregation type cannot be identified.

The first processor 501 may estimate whether the second processor 502 performs aggregation for the downlink packets on the mac layer by comparing the inter packet time with a threshold value and differently correct the packet reception time to the time point at which the packets are received at the communication link level according to whether aggregation is performed.

For example, the first processor 501 may correct a time of a downlink traffic pattern (or a traffic stream or a traffic aspect) to a time of a traffic pattern (or a traffic stream or a traffic aspect) at a time point at which the second processor 501 performs reception through the communication link on the basis of the inter packet time of the downlink packets transferred from the second processor 502.

The first processor 501 may estimate the TWT interval and the TWT service period (SP) in the corrected traffic pattern and record the traffic pattern according to each TWT service period (SP).

As another example, the first processor 501 may estimate a transmission interval of buffered packets in the doze state and detect a skipped TWT SP. For example, the first processor 501 may detect whether there is a skipped TWT SP on the basis of a first condition (for example, inter packet time > interval - duration) - α (margin1)) in which the inter packet time is larger than the threshold value and a second condition (for example, first pack packet - current packet time > duration - β (margin 2)) in which a time obtained by subtracting the previous packet time (first packet time) from the current packet time is larger than a time obtained by subtracting TWT period - β (margin2) from the TWT period according to the corrected traffic pattern.

Regardless of the order of operation 571, in operation 573, the first processor 501 may monitor uplink traffic by using uplink data (or outcoming packets) transferred to the second processor 502 and estimate the TWT interval and the TWT SP.

The first processor 501 may record uplink traffic every estimated TWT service period (SP) through downlink traffic. The first processor 501 may record uplink traffic at a time point at which the uplink traffic is pushed to the second processor 502. The first processor 501 may calculate and record at least one of the number of downlink packets according to each TWT SP, a packet size (DL packet count and packet size) through the estimated TWT SP and traffic pattern, a packet transmission and reception time from the TWT SP start time to the last time point (SP usage data time), the number of packets buffered during a doze state after a previous TWT SP (DL buffered packet count), a packet size (DL buffered packet size), the number of uplink packets (UL packet count), and/or an uplink packet size.

In operation 575, the first processor 501 may analyze the recorded TWT information through monitoring of downlink traffic or uplink traffic and identify the TWT usage characteristic at the communication link level, for example, TWT usage statistics, an early termination time, latency, and the packet transmission and reception time at the communication link level.

In operation 580, the first processor 501 may update the TWT parameter on the basis of the TWT usage characteristic information at the communication link level.

According to an embodiment, the first processor 501 may determine whether the TWT parameter configured under to the TWT agreement current made on the basis of the TWT usage characteristic information satisfy the quality of service (QoS) required by the application or service being executed and determine whether to update the TWT parameter.

In operation 585, the first processor 501 may transfer the updated TWT parameter to the second processor 502.

In operation 590, the second processor 502 may make a renegotiation (for example, convention and agreement) with the AP on the basis of the uplink TWT parameter.

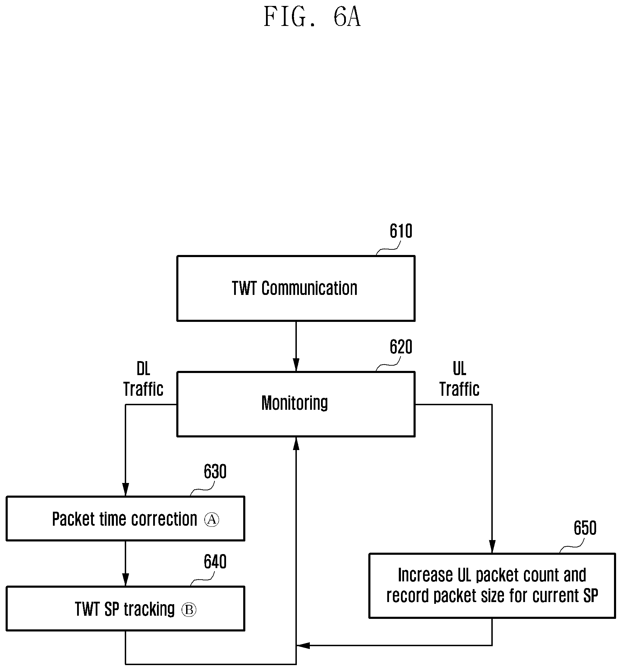

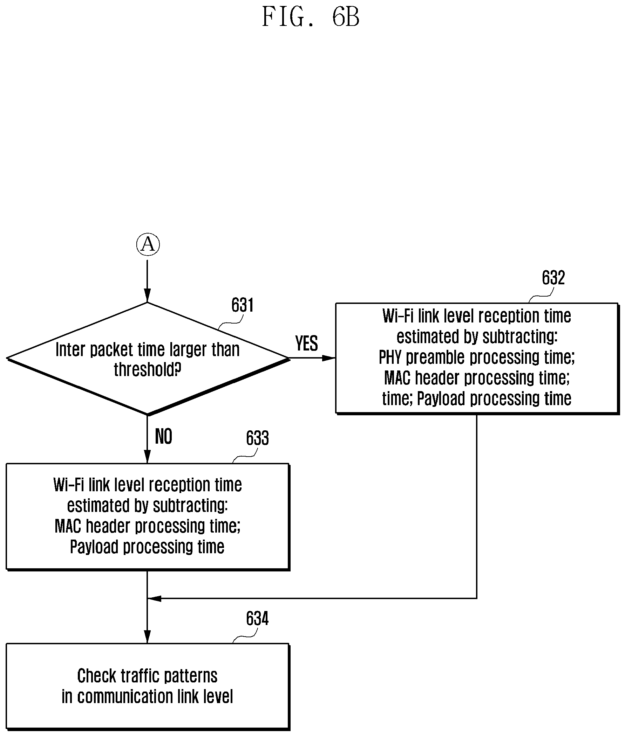

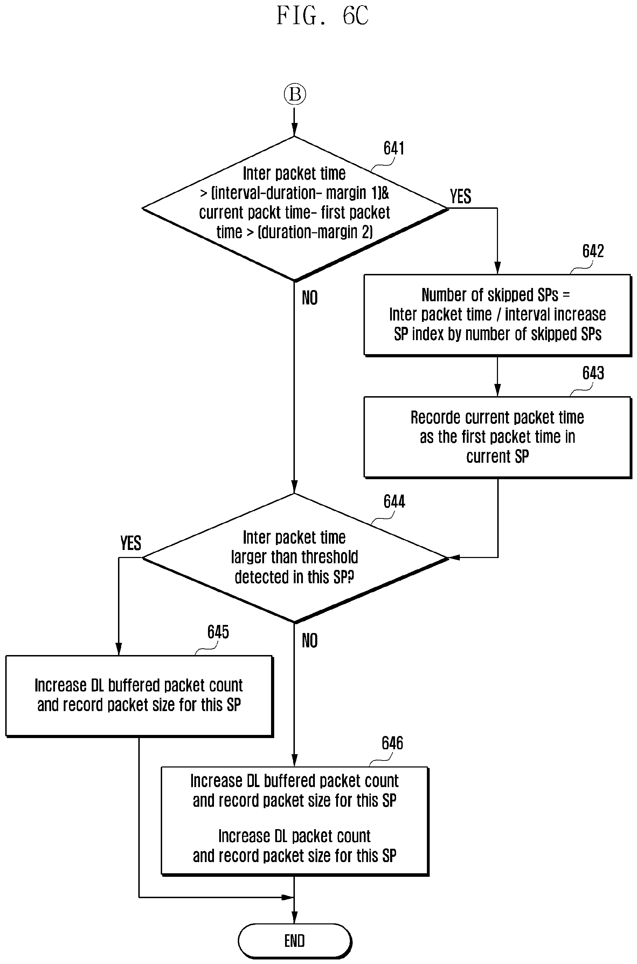

FIG. 6A is a flowchart illustrating a TWT monitoring operation according to various embodiments. FIG. 6B is a flowchart illustrating in detail the packet time correction operation (A) of FIG. 6A, and FIG. 6C is a flowchart illustrating in detail the TWT service time estimation operation (B) of FIG. 6A.

Referring to FIGs. 6A to 6C, a first processor (for example, the processor 120 of FIG. 1, the first processor 301 of FIG. 3, the first processor 410 of FIG. 4, or the first processor 501 of FIG. 5) (or a TWT monitoring module (for example, the TWT monitoring module 417 of FIG. 4) of an electronic device (for example, the electronic device 101 of FIG. 1) according to an embodiment may perform control to communicate with the AP on the basis of the agreed TWT in operation 610.

In operation 620, the first processor 410 or 501 may perform downlink (DL) traffic monitoring and uplink (UL) traffic monitoring for data transmitted and received to and from the second processor in order to identify a TWT characteristic which the second processor (for example, the second processor 420 of FIG. 4 or the second processor 502 of FIG. 5) transmits and receives to and from the AP under the TWT agreement.

In the downlink traffic monitoring, the first processor 410 or 501 may correct the reception packet time to the reception time of the wireless link level (in other words, the time at which the second processor 420 receives the packet from the AP) for the downlink packets transferred from the second processor 420 or 502 in operation 630.

For example, the first processor 410 or 501 may correct the reception time of the downlink data packets by using an algorithm of FIG. 6B on the basis of the inter packet time of the downlink packets. The inter packet time may be a packet difference between the received packet (first packet) and the next received packet (second packet). The first processor 410 or 501 may correct the time of the received packet for each packet unit.

In operation 640, the first processor 410 or 501 may estimate the TWT service period (SP) on the basis of the traffic pattern corrected to the reception time of the wireless link level.

The first processor 410 or 501 may select an inter packet time 710 between the end of one TWT SP and the start of a new TWT SP as the criterion of separating a previous TWT SP and a next TWT SP. The inter packet time 710 (for example, the inter packet time in the doze state) between a time point at which one TWT SP ends and a time point at which a new TWT SP starts may be an interval obtained by subtracting the TWT SP (including α (margin1)) from the wake TWT interval.

The first processor 410 or 501 may estimate TWT SPs at the communication link level on the basis of the inter packet time of the downlink packets and record the TWT usage characteristic (or packet statistics) of the packets for each SP. Meanwhile, due to the TWT characteristic, packets may be buffered during the doze state after the previous TWT SP

The first processor 410 or 501 may detect a skipped TWT SP by separating transmission intervals of the buffered packets in the doze state. For example, the first processor 410 or 501 may detect whether there is a skipped TWT SP by using an algorithm of FIG. 6C on the basis of the inter packet time of the downlink packets and whether the currently received packet is a packet received in this TWT SP or received in the next TWT SP at the communication link level.

In order to estimate packets buffered during the doze state, the first processor 410 or 501 may configure an interval from a first packet time to a packet time which first becomes larger than or equal to a threshold value within the TWT SP as a transmission interval of the buffered packets.

The first processor 410 or 501 may first detect an SP boundary by using a first condition (for example, inter packet time > (interval - TWT SP duration) - α (margin1)) and a second condition (for example, first packet time in an SP - current packet time > TWT SP duration - β (margin2)), divide the inter packet time by the interval, and detect the number of skipped SPs, so as to estimate the SPs. Here, as α (margin1) and β (margin2), appropriate values may be configured through a test in various environments. For example, α (margin1) and β (margin2) may provide an effect of giving a margin by multiplying a weight between 0 and 1 rather than the form of subtraction.

Independently from the downlink traffic monitoring, in the uplink traffic monitoring, the first processor 410 or 501 may record the number of packets and the packet size for the current TWT SP with respect to up/down packets transferred from the first processor to the second processor 420 or 502 on the basis of the estimated TWT SPs in operation 650.

Hereinafter, in a more detailed description of the algorithm in operation 630 of correcting the received packets, the first processor 410 or 501 may determine whether the inter packet time of the download packet received from the second processor 410 or 502 is larger than a threshold value (for example, TWT interval - TWT period) + α (margin1)) in operation 631 as illustrated in FIG. 6B.

The first processor 410 or 501 may estimate packets received by the first processor 501 as packets for which aggregation has not been performed by the second processor 502 when the inter packet time is larger than the threshold value (for example, TWT interval - TWT period) + α (margin1)) and may estimate the packets received by the first processor 501 as a set of packets for which aggregation has been performed by the second processor 420 or 405 when the inter packet time is smaller than the threshold value (for example, (TWT interval - TWT SP duration) - α (margin1)).

In operation 632, when the inter packet time is larger than the threshold value (for example, TWT interval - TWT SP duration - α (margin1)), the first processor 410 or 501 may correct the packet reception time to the reception time of the communication link level (in other word, the time point at which the second processor performs reception from the AP) by subtracting the time required for processing and receiving mac layer data and physical layer data and the time required for receiving payload data from the time point at which the transmitted packet is received (in other words, the packet reception time). For example, when an aggregation packet set (for example, an A-MPDU type) is estimated, the first processor 410 or 501 may correct the reception time in consideration of a PHY and MAC header processing time of the first packet and correct the reception time of the packets in consideration of the MAC header processing time of the following packets.

In operation 633, when the inter packet time is smaller than the threshold value (for example, TWT interval - TWT SP duration - α (margin1)), the first processor 410 or 501 may correct the packet reception time to the reception time of the communication link level (in other word, the time point at which the second processor performs reception from the AP) by subtracting the time required for receiving mac layer data and the time required for receiving payload data from the time point at which the transmitted packet is received. For example, when the packets which have not been aggregated are estimated, the first processor 410 or 501 may correct the reception time of packets in consideration of the PHY and MAC header processing time for all packets. In operation 634, the first processor 410 or 501 may identify the traffic pattern corrected to the communication link level (in other words, the time point at which the second processor 530 performs reception through the downlink during communication with the AP) on the basis of packets received from the second processor through the downlink).

In a more detailed description of the algorithm of operation 640 in which the first processor 410 or 501 estimates the TWT SPs, as illustrated in FIG. 6C, the first processor 410 or 501 may determine whether a first condition (for example, inter packet time > (interval - TWT SP duration) - α (margin1)) and a second condition (for example, first packet time in an SP - current packet time > TWT SP duration - β (margin2)) are satisfied for the received packets in operation 641.

In operation 642, the first processor 410 or 501 may detect the number of skipped TWT SPs by dividing the inter packet time satisfying both the first condition and the second condition by the estimated TWT interval and increase a TWT SP index by the number of skipped TWT SPs.

In operation 643, the first processor 410 or 501 may record the current packet time as a first packet time within the current TWT SP (for example, an N^{th} TWT SP, N being an integer).

In operation 644, the first processor 410 or 501 may determine whether the inter packet time which does not satisfy the first condition and the second condition is larger than a threshold value (for example, TWT interval - TWT SP duration - α (margin1)) for the packets received within the TWT SP (for example, the N^{th} TWT SP).

When the inter packet time which does not satisfy the first condition and the second condition is larger than the threshold value (for example, TWT interval - TWT SP duration - α (margin 1)) for the received packets, the first processor 410 or 501 may estimate that the TWT SP ends and record the number of downlink packets included in the current TWT SP (for example, a first TWT SP) and the packet size with respect to the packets received before a time point at which the inter packet time is larger than the threshold value in operation 645. Further, with respect to the packets received after the time point at which the inter packet time is larger than the threshold value, the number of packets buffered during the doze state in the TWT SP and the packet size may be increased.

When the inter packet time which does not satisfy the first condition and the second condition is smaller than the threshold value (for example, TWT interval - TWT SP duration - α (margin1)) for the received packets, the first processor 410 or 501 may estimate that the TWT SP does not end and increase the received packets to the number of downlink packets in the current TWT SP and the packet size and record the same in operation 646. According to circumstances, when there are packets received during the previous doze state, the packets may be recorded in the number of buffered packets (DL buffered packet count) and the buffered packet size.

For example, the packets received before the time point at which the inter packet time is larger than the threshold value may be included in the previous TWT SP and the following packets may be included in the next TWT SP. A time point at which the inter packet time first becomes larger than or equal to the threshold value since the next TWT SP start time may be a time point at which buffered packets are separated, and packets received until the time point at which the buffered packets are separated since the next TWT SP start time may be recorded to have the number of buffered packets in the next TWT SP and the packet size.

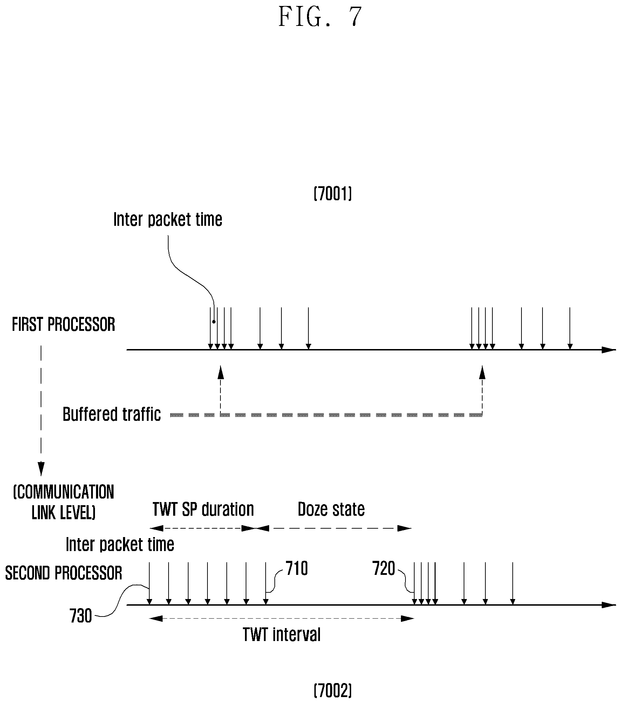

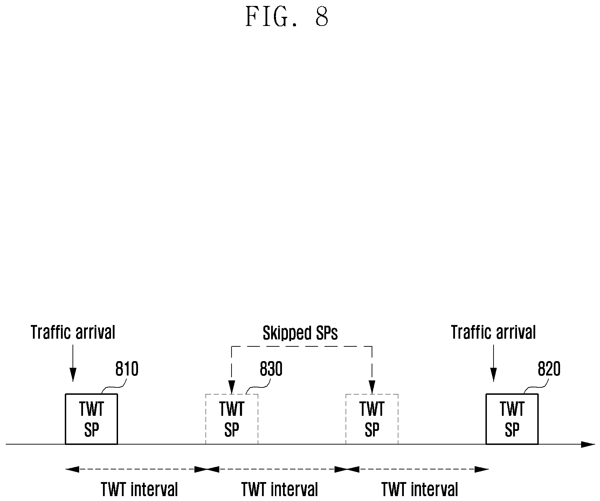

FIG. 7 illustrates a traffic pattern of downlink packets according to an embodiment, and FIG. 8 illustrates a situation in which skipped TWT SP during TWT SP estimation may be generated according to an embodiment.

Referring to FIGs. 7 and 8, for example, the first processor 410 or 501 may receive downlink data having a traffic pattern indicated by reference numeral <7001> from the second processor 420 or 502.

The first processor 410 or 501 may put an inter packet time (for example, the inter packet time in the doze state) of an interval between time points at which one TWT SP ends and a new TWT SP starts as the criterion of separating a previous TWT SP and a next TWT SP. For example, the inter packet time (for example, the inter packet time in the doze state) of the interval between the time points at which one TWT SP ends and a new TWT SP starts may be an interval obtained by subtracting the TWT SP duration (including α (margin1)) from the wake TWT interval. The first processor 410 or 501 may select an inter packet time 710 of the interval between the time points at which one TWT SP ends and a new TWT SP starts as the criterion of separating a previous TWT SP and a next TWT SP.

In order to estimate packets buffered during the doze state, the first processor 410 or 501 may configure an interval from a first packet time to a packet time which first becomes larger than or equal to a threshold value within the TWT SP as a transmission interval of the buffered packets. However, as illustrated in FIG. 8, when the inter packet time is estimated on the basis of subtraction of the TWT SP from the TWT interval, a skipped TWT SP 830 may be generated between a first TWT SP 810 and a second TWT SP 820.

According to an embodiment, the first processor 410 or 501 may first detect an SP boundary by using a first condition (for example, inter packet time > (interval - TWT SP duration) - α (margin1)) and a second condition (for example, first packet time in an SP - current packet time > TWT SP duration - β (margin2)), divide the inter packet time by the interval, and detect the number of skipped SPs, so as to estimate the SPs.

Reference numeral <7002> may be an example indicating a traffic pattern corrected to a reception time point (for example, a time point at which the second processor performs reception from the AP) of the communication link level on the basis of the inter packet time by the first processor 502. As indicated by reference numeral <7002>, the first processor 501 may identify that an inter packet time between a 7^{th} packet 710 and an 8^{th} packet 720 is larger than a threshold value through a traffic pattern corrected to the communication link level and determine the inter packet time between the 7^{th} packet 710 and the 8^{th} packet 720 as the criterion of separating TWT service periods (SPs). The first processor 501 may identify a time between a 1^{st} packet 730 and the 7^{th} packet 710 as a TWT service time (service period (SP)) of the communication link level, estimate the interval between the 7^{th} packet 710 and the 8^{th} packet 720 as the doze state, and identify a traffic pattern of the communication link level (for example, a time point at which the second processor receives packets from the AP) for the downlink.

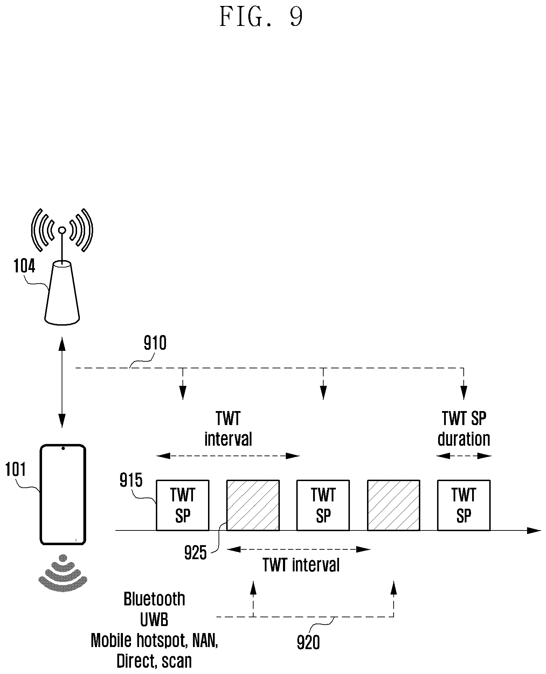

FIG. 9 illustrates a situation of communication coexistence using the TWT operation according to an embodiment.

Referring to FIG. 9, the electronic device 101 may support multi-communication connection service (connectivity). For example, the multi-communication connection service (connectivity) may support Wi-Fi communication, Bluetooth communication, and ultra wide band (UWB) communication, and the different communication connections can coexist to operate without any interference therebetween.

In another example, the electronic device 101 may support a plurality of connection modes between the electronic device 101 and the AP 104 (for example, Wi-Fi direct for sharing large media between mobile devices, Wi-Fi aware or neighbor awareness networking (NAN) making discovery between adjacent devices and service group configuration possible, or Wi-Fi mobile hotspot for sharing the Internet connection through a cellular network with neighbor terminals) in Wi-Fi communication, and different modes may coexist to operate with any interference.

The electronic device 101 according to an embodiment may improve the performance of the coexistence operation through TWT monitoring. As an example, the electronic device 101 may be connected to the AP through first communication 910 (for example, Wi-Fi) and connected to another device through second communication 920 (for example, Bluetooth or UWB). As another example, the electronic device 101 may be connected to the AP through a first mode (for example, a Wi-Fi station) and connected to the AP through a second mode (for example, Wi-Fi aware, neighbor awareness networking (NAN), or Wi-Fi hotspot).

When the electronic device 101 performs the first communication 910 with the AP, the electronic device 101 may operate through discussion of TWT SP duration every interval for a TWT negotiation. The electronic device 101 may perform the first communication 910 on the basis of TWT SP duration and TWT interval as indicated by reference numeral 915 and identify a TWT usage characteristic according to an application being executed or a link layer state through monitoring. The electronic device 101 may more efficiently perform the coexistence operation by configuring a service period 925 and an interval through the second communication 920 different from the first communication in an interval (for example, the doze state) in which the first communication is not used since the TWT usage performance at the link level can be identified and transmitting and receiving data to and from an external electronic device.

According to various embodiments, a method of controlling a target wake time (TWT) by an electronic device (for example, the electronic device 101 FIG. 1) may include an operation of controlling a communication module to transmit and receive data to and from an access point according to a target wake time (TWT) agreement based on a first TWT parameter by a first processor (for example, the main processor 121 of FIG. 1, the first processor 301 of FIG. 3A, or the first processor 410 of FIG. 4), an operation of transmitting and receiving communication data to and from a second processor (for example, the second processor 302 of FIG. 3A or the second processor 420 of FIG. 4) included in the communication module during communication with the AP, an operation of identifying a traffic pattern by monitoring at least one of downlink packets received from the second processor and uplink packets transferred to the second processor by the first processor, an operation of estimating a TWT interval and a TWT service period (SP) of a communication link level processed by the second processor using the monitored traffic pattern, an operation of updating the first TWT parameter to a second TWT parameter corresponding to a quality of service (QoS) of at least one application or service executed by the first processor, based on the estimated TWT interval and TWT SP, and an operation of performing control to renegotiate the TWT with the access point by transferring the second TWT parameter to the second processor.

According to various embodiments, the operation of estimating the TWT interval and the TWT service period (SP) of the communication link level may include an operation of correcting a reception time of the downlink packets to a reception time at the communication link level processed by the second processor by subtracting a processing and transmission time of the packets by the second processor, based on an inter packet time between a time point at which a first packet is received and a time point at which a second packet is received for the downlink packets, estimating TWT SPs at the communication link level, and identifying a traffic pattern corrected from the monitored traffic pattern.

According to various embodiments, the operation of identifying the corrected traffic pattern may include an operation of designating a first inter packet time satisfying a condition being larger than a threshold value as a reference range of separating a first TWT SP and a second TWT SP among the inter packet times for the downlink packets and then determining a first packet to a last packet at a time point at which the condition in which the inter packet time is larger than the threshold value is not satisfied as packets included in one TWT SP, an operation of, in case that the inter packet time of the received packet is larger than the threshold value, correcting a time point at which the first processor receives the received packets to the reception time point of the communication link level by subtracting a time required for processing and receiving mac layer data and physical layer data and a time required for receiving payload data from the time point, and an operation of, in case that the inter packet time of the received packet is smaller than the threshold value, correcting the time point at which the received packet is received to the reception time of the communication link level by subtracting a time required for receiving mac layer data and the time required for receiving payload data from the time point, and wherein the threshold value is a value obtained by subtracting the TWT SP and a preset first margin from a TWT interval time indicating all intervals before start of a next TWT SP from a time point at which one TWT SP starts.

According to various embodiments, the operation of identifying the corrected traffic pattern may further include an operation of separating transmission intervals of packets buffered in a doze state between the first TWT SP and the second TWT SP, detecting skipped TWT SPs, and increasing an index of the TWT SP by the detected number, so as to identify the corrected traffic pattern.

According to various embodiments, the operation of detecting the skipped TWT SPs may include an operation of detecting the skipped TWT SPs, based on a first condition in which the inter packet time of packets is larger than the threshold value and a second condition in which a time obtained by subtracting a previous packet time (first packet time) from a current packet time is larger than a time obtained by subtracting a preset second margin from the TWT SP, based on the corrected traffic pattern.

According to various embodiments, the operation of detecting the skipped TWT SPs may further include an operation of dividing an inter packet time satisfying both the first condition and the second condition by the TWT interval, detecting a number of skipped TWT SPs, and increasing indexes of TWT SPs by the detected number.

According to various embodiments, the operation of identifying the corrected traffic pattern may further include an operation of determining whether an inter packet time which does not satisfy the first condition and the second condition is larger than a threshold value and, in case that the inter packet time is larger than the threshold value, estimating that a current TWT SP ends, increasing packets received at the inter packet time which does not satisfy the first condition and the second condition in a number of buffered packets (DL buffered packet count) and a packet size of the next TWT SP, and recording a number and a size of downlink packets received within the current TWT SP and an operation of, in case that the inter packet time which does not satisfy the first condition and the second condition is smaller than the threshold value, estimating that the current TWT SP does not end and recording a number of downlink packets in a current TWT SP and a packet size.

According to various embodiments, the operation of estimating the TWT interval and the TWT service period at the communication link level may further include an operation of recording a number of uplink packets for a current TWT SP and a packet size for the uplink packets transferred from the first processor to the second processor, based on the estimated TWT SP.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

## Claims

1. An electronic device comprising:
a first processor;
a communication module comprising a second processor; and
a memory,
wherein the memory comprises instructions causing the first processor to:
control the communication module to transmit and receive data to and from an access point according to a target wake time (TWT) agreement based on a first TWT parameter in communication with the access point;
identify a traffic pattern by monitoring at least one of downlink packets received from the second processor and uplink packets transferred to the second processor;
estimate a TWT interval and a TWT service period (SP) of a communication link level processed by the second processor using the monitored traffic pattern;
update the first TWT parameter to a second TWT parameter corresponding to a quality of service (QoS) of at least one application or service executed by the first processor, based on the estimated TWT interval and TWT SP; and
perform control to renegotiate the TWT with the access point by transferring the second TWT parameter to the second processor.

2. The electronic device of claim 1, wherein the memory further comprises instructions causing the first processor to:
correct a reception time of the downlink packets to a reception time at the communication link level processed by the second processor by subtracting a processing and transmission time of the packets by the second processor, based on an inter packet time between a time point at which a first packet is received and a time point at which a second packet is received for the downlink packets in order to estimate the TWT interval and the TWT service period (SP) of the communication link level; and
identify a traffic pattern corrected from the monitored traffic pattern by estimating TWT SPs at the communication link level.

3. The electronic device of claim 2, wherein the memory further comprises instructions causing the first processor to:
designate a first inter packet time satisfying a condition being larger than a threshold value as a reference range of separating a first TWT SP and a second TWT SP among the inter packet times for the downlink packets; and
determine a first packet to a last packet at a time point at which the condition in which the inter packet time is larger than the threshold value is not satisfied as packets included in one TWT SP, and
wherein the threshold value is a value obtained by subtracting the TWT SP and a preset first margin from a TWT interval time indicating all intervals before start of a next TWT SP from a time point at which one TWT SP starts.

4. The electronic device of claim 3, wherein the memory further comprises instructions causing the first processor to:
in case that the inter packet time of the received packet is larger than the threshold value, correct a time point at which the first processor receives the received packets to the reception time point of the communication link level by subtracting a time required for processing and receiving mac layer data and physical layer data and a time required for receiving payload data from the time point; and
in case that the inter packet time of the received packet is smaller than the threshold value, correct the time point at which the received packet is received to the reception time of the communication link level by subtracting a time required for receiving mac layer data and the time required for receiving payload data from the time point.

5. The electronic device of claim 3, wherein the memory further comprises instructions causing the first processor to separate transmission intervals of packets buffered in a doze state between the first TWT SP and the second TWT SP, detect skipped TWT SPs, and increase an index of the TWT SP by the detected number, so as to identify the corrected traffic pattern.

6. The electronic device of claim 5, wherein the memory further comprises instructions causing the first processor to detect the skipped TWT SPs, based on a first condition in which the inter packet time of packets is larger than the threshold value and a second condition in which a time obtained by subtracting a previous packet time (first packet time) from a current packet time is larger than a time obtained by subtracting a preset second margin from the TWT SP, based on the corrected traffic pattern.

7. The electronic device of claim 6, wherein the memory further comprises instructions causing the first processor to divide an inter packet time satisfying both the first condition and the second condition by the TWT interval, detect a number of skipped TWT SPs, and increase indexes of TWT SPs by the detected number.

8. The electronic device of claim 6, wherein the memory further comprises instructions causing the first processor to determine whether an inter packet time which does not satisfy the first condition and the second condition is larger than a threshold value and, in case that the inter packet time is larger than the threshold value, estimate that a current TWT SP ends, increase packets received at the inter packet time which does not satisfy the first condition and the second condition in a number of buffered packets (DL buffered packet count) and a packet size of the next TWT SP, and record a number and a size of downlink packets received within the current TWT SP.

9. The electronic device of claim 6, wherein the memory further comprises instructions causing the first processor to, in case that the inter packet time which does not satisfy the first condition and the second condition is smaller than the threshold value, estimate that the current TWT SP does not end and record a number of downlink packets in a current TWT SP and a packet size.

10. The electronic device of claim 6, wherein the memory further comprises instructions causing the first processor to record a number of uplink packets for a current TWT SP and a packet size for the uplink packets transferred from the first processor to the second processor, based on the estimated TWT SP in order to estimate the TWT interval and the TWT service period (SP) of the communication link level.

11. The electronic device of claim 2, wherein the memory further comprises instructions causing the first processor to:
correct the reception time of the downlink packets and estimate the TWT service periods at the communication link level, so as to calculate a number of downlink packets for each TWT SP and a packet size (DL packet count and packet size), a packet transmission/reception time (SP usage data time) from a TWT SP start time to a last time point, a number of buffered packets (DL buffered packet count) during a doze state after a previous TWT SP, a packet size (DL buffered packet size), and an uplink (UL) packet count; and
identify TWT usage characteristic information by analyzing the calculated information, and
wherein the TWT usage characteristic information comprises at least one of TWT usage statistics, an early termination time, latency, and a packet transmission/reception time at the communication link level.

12. A method of controlling a target wake time (TWT) by an electronic device, the method comprising:
controlling a communication module to transmit and receive data to and from an access point according to a target wake time (TWT) agreement based on a first TWT parameter by a first processor;
transmitting and receiving communication data to and from a second processor included in the communication module during communication with the AP;
identifying a traffic pattern by monitoring at least one of downlink packets received from the second processor and uplink packets transferred to the second processor by the first processor;
estimating a TWT interval and a TWT service period (SP) of a communication link level processed by the second processor using the monitored traffic pattern;
updating the first TWT parameter to a second TWT parameter corresponding to a quality of service (QoS) of at least one application or service executed by the first processor, based on the estimated TWT interval and TWT SP; and
performing control to renegotiate the TWT with the access point by transferring the second TWT parameter to the second processor.

13. The method of claim 12, wherein the estimating the TWT interval and the TWT service period (SP) of the communication link level comprises correcting a reception time of the downlink packets to a reception time at the communication link level processed by the second processor by subtracting a processing and transmission time of the packets by the second processor, based on an inter packet time between a time point at which a first packet is received and a time point at which a second packet is received for the downlink packets, estimating TWT SPs at the communication link level, and identifying a traffic pattern corrected from the monitored traffic pattern.

14. The method of claim 13, wherein the identifying of the corrected traffic pattern comprises:
designating a first inter packet time satisfying a condition being larger than a threshold value as a reference range of separating a first TWT SP and a second TWT SP among the inter packet times for the downlink packets and then determining a first packet to a last packet at a time point at which the condition in which the inter packet time is larger than the threshold value is not satisfied as packets included in one TWT SP;
in case that the inter packet time of the received packet is larger than the threshold value, correcting a time point at which the first processor receives the received packets to the reception time point of the communication link level by subtracting a time required for processing and receiving mac layer data and physical layer data and a time required for receiving payload data from the time point; and
in case that the inter packet time of the received packet is smaller than the threshold value, correcting the time point at which the received packet is received to the reception time of the communication link level by subtracting a time required for receiving mac layer data and the time required for receiving payload data from the time point, and
wherein the threshold value is a value obtained by subtracting the TWT SP and a preset first margin from a TWT interval time indicating all intervals before start of a next TWT SP from a time point at which one TWT SP starts.

15. The method of claim 14, wherein the identifying of the corrected traffic pattern further comprises separating transmission intervals of packets buffered in a doze state between the first TWT SP and the second TWT SP, detecting skipped TWT SPs, and increasing an index of the TWT SP by the detected number, so as to identify the corrected traffic pattern, and
wherein the detecting of the skipped TWT SPs comprises detecting the skipped TWT SPs, based on a first condition in which the inter packet time of packets is larger than the threshold value and a second condition in which a time obtained by subtracting a previous packet time (first packet time) from a current packet time is larger than a time obtained by subtracting a preset second margin from the TWT SP, based on the corrected traffic pattern.
